# FASCICULE DE BREVET EUROPEEN

(11) **EP 1 358 911 B1**
(45) Date de publication et mention de la délivrance du brevet: **24.05.2006**
(21) Numéro de dépôt: 03290799.0
(22) Date de dépôt: 28.03.2003
(51) Int. Cl.: A62B 7/14

(54) **Système embarqué de production d'oxygène pour aeronefs, en particulier aeronefs à long rayon d'action**
In Flugzeugen, insbesondere in Langstreckenflugzeugen, montierte Sauerstofferzeugungsanlage
On board oxygen production system in aircraft, long range aircraft in particular

(30) Priorité: 03.05.2002 FR 0205576
(43) Date de publication de la demande: 05.11.2003
(73) Titulaire: L'Air Liquide S. A. à Directoire et Conseil de Surveillance pour l'Etude et l'Exploitation des Procédés Georges Claude, 75321 Paris Cedex 07 (FR)
(72) Inventeur: Cazenave, Jean-Michel, 38180 Seyssins (FR); Dehayes, Jean, 38660 Lumblin (FR); Lessi, Stéphane, 38000 Grenoble (FR); Zapata, Richard, 38180 Seyssins (FR)
(74) Mandataire: Pittis, Olivier

(56) Documents cités:
- US-A- 4 428 372
- US-A- 5 268 023
- US-A- 5 672 195
- US-A- 6 068 678
- US-A- 6 077 331

## Description

La présente invention concerne un système de concentration d'oxygène, notamment de type OBOGS, pour aéronefs, en particulier pour avions de ligne de type gros-porteurs à long rayon d'action.

Actuellement, l'utilisation d'oxygène gazeux par les pilotes et les passagers d'un avion de ligne commercial civil se fait en cas de décompression de la cabine (passagers et pilotes), en cas de protection contre les fumées et gaz toxiques (pilotes), et en cas de protection préalable, lors de croisière à haute altitude (pilotes).

Par ailleurs, les pilotes d'avions d'armes militaires, quant à eux, ont besoin d'une alimentation permanente en oxygène, pendant leurs missions en vol. Lors de certaines missions spécifiques, il en va de même pour les équipages d'avions de transport tactiques militaires et d'hélicoptères.

Les contraintes imposées par l'environnement aéronautique conduisent à concevoir des équipements les plus légers possibles et capables de fournir la plus grande quantité d'oxygène possible avec une autonomie importante et, par conséquent, une logistique la plus réduite possible.

Dans les avions de chasse modernes, le ou les pilotes sont alimentés en permanence par un système de génération d'oxygène embarqué, couramment appelé OBOGS (pour *On-Board Oxygen Generating System*), utilisant la technologie de séparation des gaz de l'air par tamis moléculaires de type zéolite.

Le document EP-A-391607 décrit ainsi un système de concentration d'oxygène de type OBOGS utilisable pour alimenter les membres d'équipages d'un avion mettant en oeuvre un adsorbant de type tamis moléculaire.

Par ailleurs, le document US-A-4,960,119 enseigne également un système de type OBOGS utilisant des adsorbants ayant une affinité plus élevée pour l'azote que pour l'oxygène.

En outre, d'autres systèmes de type OBOGS sont aussi décrits par les documents US-A-4,651,728 et EP-A-0364283.

Par contre, dans les avions civils, l'apport total d'oxygène gazeux aux personnes est assuré par des cylindres d'oxygène sous pression ou par des générateurs d'oxygène chimiques, par exemple sur les AIRBUS A340 (réserve d'oxygène sous forme gazeuse) et A320 (générateur chimique). Ces systèmes civils de production d'oxygène sont actuellement conçus et dimensionnés pour assurer l'approvisionnement des passagers en oxygène, pendant une durée variant de 15 à 22 minutes, essentiellement à la suite d'une perte de pressurisation de la cabine.

De même que pour les avions d'armes, il est maintenant envisagé d'équiper aussi les nouveaux avions de ligne, notamment les très gros-porteurs à long rayon d'action, par exemple les avions de type A380 de AIRBUS, ainsi que les avions d'affaires, de systèmes embarqués de type OBOGS à tamis moléculaire adsorbant.

En effet, les systèmes de type OBOGS à tamis moléculaire par rapport au stockage d'oxygène présentent les avantages :
- d'un gain de masse lorsque les temps d'utilisation dépassent typiquement les 30 min, comme c'est le cas lors des déroutements des avions qui sont prévus sur les nouvelles routes aériennes rallongées,
- d'une logistique réduite,
- d'une sécurité et une disponibilité accrues, et
- d'une autonomie illimitée.

Ces mêmes avantages existent aussi lorsque le système OBOGS est embarqué dans un avion de transport tactique militaire ou un hélicoptère, quand ces derniers doivent réaliser des missions qui nécessitent une utilisation d'oxygène.

Toutefois, un problème qui se pose est que les systèmes de type OBOGS existant sont beaucoup plus lourds que les systèmes embarqués classiques de stockage d'oxygène, ce qui constitue une entrave sérieuse à leur utilisation dans des aéronefs dans lesquels la diminution de la masse embarquée est un souci constant car ayant un impact non négligeable sur la consommation de carburant.

En d'autres termes, le problème qui se pose est de pouvoir embarquer des systèmes de type OBOGS à tamis moléculaire dans les aéronefs sans que cela n'ait un impact négatif sur la masse embarquée et ce, à production sensiblement égale d'oxygène, voire supérieure, par rapport à un système classique.

La solution de l'invention est alors un système embarqué dans un aéronef pour la production d'un flux gazeux enrichi en oxygène à partir d'un mélange gazeux d'oxygène et d'azote, en particulier de l'air, comportant au moins un adsorbeur contenant au moins un adsorbant permettant d'adsorber au moins une partie des molécules d'azote contenues dans le mélange d'oxygène et d'azote d'alimentation, caractérisé en ce que ledit adsorbant comprend une zéolite de type faujasite, ayant un rapport Si/Al de 1 à 1.50, échangée à au moins 80% par des cations lithium.

Selon le cas, le système de l'invention peut comprendre l'une ou plusieurs des caractéristiques techniques suivantes :
- il comporte au moins 2 adsorbeurs fonctionnant de manière alternée.
- l'adsorbant est une zéolite de type X ayant un rapport Si/Al de 1 à 1.25, de préférence de l'ordre de 1.
- la zéolite est sous forme de particules, notamment des billes, ayant une taille moyenne inférieure à 0.7 mm, de préférence de l'ordre de 0.5 mm. Les particules de zéolite peuvent être avec ou sans liant.
- la zéolite est échangée de 85% à 97% par des cations lithium, de préférence de 86% à 95%.
- il comprend des moyens de compression permettant de comprimer le mélange gazeux contenant l'oxygène et l'azote, par exemple un compresseur de gaz, et des moyens de distribution permettant d'assurer une alimentation alternative de chaque adsorbeur avec le mélange gazeux comprimé délivré par les moyens de compression. Les moyens de distribution peuvent comprendre des canalisations de gaz, des vannes, des masques ou toutes autres interfaces ou équipements de régulation adéquats permettant une administration aisée et efficace du flux d'oxygène aux utilisateurs.

Le système de l'invention peut équiper tout aéronef, tels les avions ou les hélicoptères, mais est particulièrement adapté aux avions de ligne, notamment les nouveaux avions de ligne de type gros-porteurs à long rayon d'action.

L'invention porte aussi sur un procédé pour alimenter les voies aériennes supérieures d'au moins une personne se trouvant dans un aéronef avec un flux de gaz enrichi en oxygène, dans lequel ledit flux enrichi en oxygène est produit selon les étapes de
a/ comprimer un mélange d'oxygène et d'azote d'alimentation à une pression comprise entre 0,5 et 5 bars absolus,
b/ alimenter au moins un adsorbeur contenant au moins un adsorbant permettant d'adsorber au moins une partie des molécules d'azote contenues dans le mélange d'oxygène et d'azote d'alimentation,
c/ produire un flux de gaz enrichi en oxygène,
d/ convoyer ledit flux de gaz enrichi en oxygène jusqu'aux voies aériennes supérieures d'au moins une personne,
caractérisé en ce que l'adsorbant comprend une zéolite de type faujasite, ayant un rapport Si/Al de 1 à 1.50, échangée à au moins 80% par des cations lithium.

Selon le cas, le procédé de l'invention peut comprendre l'une ou plusieurs des caractéristiques techniques suivantes :
- le flux enrichi en oxygène contient une proportion d'oxygène supérieure à la proportion d'oxygène présente dans le mélange d'oxygène et d'azote d'alimentation, de préférence le flux enrichi en oxygène contient une proportion volumique d'oxygène comprise entre 30% et 95% en volume.
- le mélange d'oxygène et d'azote d'alimentation contient majoritairement de l'azote, de préférence le mélange d'oxygène et d'azote d'alimentation est de l'air.
- il comprend, en outre, une étape de régénération de l'adsorbant par diminution de la pression régnant dans l'adsorbeur jusqu'à une pression basse comprise entre 0.09 et 1 bar, de préférence entre 0.1 et 0.9 bar ; la pression basse de régénération étant inférieure à la pression haute d'adsorption.
- il met en oeuvre 2 ou 3 adsorbeurs fonctionnant par cycle de production.
- chaque adsorbeur est soumis à des cycles de production ayant une durée de cycle inférieure à 15 secondes (par exemple un cycle de 2 x 7 sec pour 2 adsorbeurs), de préférence inférieure à 10 sec (par exemple un cycle de 2 x 5 sec pour 2 adsorbeurs).
- l'adsorbant est une zéolite de type X ayant un rapport Si/Al de 1 à 1.25, de préférence de l'ordre de 1.
- la zéolite est sous forme de particules, notamment des billes, ayant une taille moyenne inférieure à 0.7 mm, de préférence de l'ordre de 0.5 mm.
- la zéolite est échangée de 85% à 97% par des cations lithium, de préférence de 86% à 95%.
- le gaz enrichi en oxygène ainsi produit est distribué aux voies aériennes supérieures d'au moins un pilote ou d'au moins un passager se trouvant dans l'aéronef, de préférence le gaz enrichi en oxygène ainsi produit est distribué aux voies aériennes supérieures d'au moins un passager lorsque l'avion subit une dépressurisation de la cabine passager.

L'idée de la présente invention est de diminuer la masse des systèmes embarqués de type OBOGS pour avions civils, avions d'armes et autres aéronefs, y compris les hélicoptères, en utilisant des tamis moléculaires adsorbants particuliers plus performants.

En effet, l'utilisation des adsorbants selon l'invention permet d'obtenir soit :
- à iso-masse d'adsorbant et à iso-débit de production, une augmentation de la concentration ou de la capacité à enrichir en oxygène dans le gaz produit d'où il s'ensuit une amélioration de la protection physiologique des passagers ou des pilotes, et un rallongement de la durée de vie de l'équipement, par suite de la chute de concentration en oxygène dans le gaz produit en deçà d'un certain seuil, en partant d'une concentration en oxygène initiale plus élevée ;
- à iso-concentration d'oxygène dans le gaz produit et à iso-débit de production, donc à iso-performances, une diminution de la masse d'adsorbant nécessaire donc une diminution de la masse de l'équipement embarqué, donc un gain substantiel pour l'avionneur.

Dans le cadre de l'invention, l'adsorbant préféré utilisé est donc une zéolite de type X ayant un rapport Si/Al compris entre 1 et 1.25 et échangée à plus de 80% par des cations lithium, le reste des cations (jusqu'à 100%) étant essentiellement des cations résiduels du type Na et K, voire éventuellement Ca. De tels adsorbants sont habituellement utilisés pour produire de l'oxygène sur les sites industriels et sont notamment décrits dans les documents suivants auxquels on pourra se référer pour plus de détails : EP-A-885646, EP-A-940175, EP-A-908218, EP-A-297542 et US-A-5,268,023.

Le système proposé dans le cadre de la présente invention est donc, selon un mode réalisation préféré, un système OBOGS de type VPSA (Vacuum and Pressure Swing Adsorption) à deux adsorbeurs fonctionnant de manière alternée à un rythme rapide, typiquement par cycles de production d'oxygène d'une durée inférieure à 2 × 7 sec (7 sec étant le temps de demi-cycle) et pouvant aller jusqu'à 2 × 2 sec, ce qui assure une productivité maximale et optimale (quantité d'oxygène produite / masse d'adsorbant).

Ce système peut également fonctionner avec davantage d'adsorbeurs, par exemple trois adsorbeurs.

Lorsqu'un des deux adsorbeurs est en phase de production d'oxygène à pression haute, l'autre est en phase de régénération à pression basse (décompression).

Plus précisément, chaque adsorbeur est soumis, durant le cycle de production, à:
- une pression haute typiquement entre 0,5 bar abs et 5 bar abs, de préférence de l'ordre de 3 bars pour les avions civils, et
- pression basse, typiquement comprise entre 1013 mbars (sol) et 116 mbars (50000 ft), de préférence de l'ordre de 466 mbars (20000 ft).

Afin de pouvoir répondre aux attentes, les caractéristiques de débit de production en oxygène de chaque concentrateur sont les suivantes :
- pour une alimentation en oxygène des pilotes (par exemple ceux d'avions d'armes ou d'avions de ligne) ou d'un équipage réduit (autres aéronefs), le débit de gaz enrichi en oxygène est comprise de préférence entre 20 et 100 I/min STPD (Standard Temperature Pressure Dry = Température de 0°C, Pression de 1013 mbar, PH₂O égale à 0),
- pour une alimentation en oxygène des passagers, le débit est plus élevé, à savoir généralement entre 100 et 500 l/min STPD par système concentrateur. De là, lorsqu'il sera nécessaire d'avoir un débit total supérieur, il suffira de prévoir le nombre suffisant de systèmes concentrateurs permettant d'atteindre ce débit total, par exemple 4 systèmes concentrateurs de 500 l/min chacun pour un débit total de 2000 l/min.

La concentration d'oxygène en sortie des concentrateurs est variable avec l'altitude de vol et se situe typiquement entre 30% et 95% dans tous les cas envisagés , à savoir l'alimentation en oxygène des pilotes ou des passagers, quel que soit l'aéronef considéré.

Le type d'adsorbant utilisé dans le cadre de l'invention est une zéolite de type faujasite, en particulier une zéolite X ayant un rapport Si/Al compris entre 1 et 1.50, préférentiellement proche de 1, ladite zéolite étant échangée à au moins 80% par des cations lithium, de préférence entre 85% et 97%, et ayant par ailleurs une granulométrie moyenne inférieure à 0,8 mm, de préférence de l'ordre de 0.5 mm.

### Exemple 1 : Système concentrateur pour pilotes

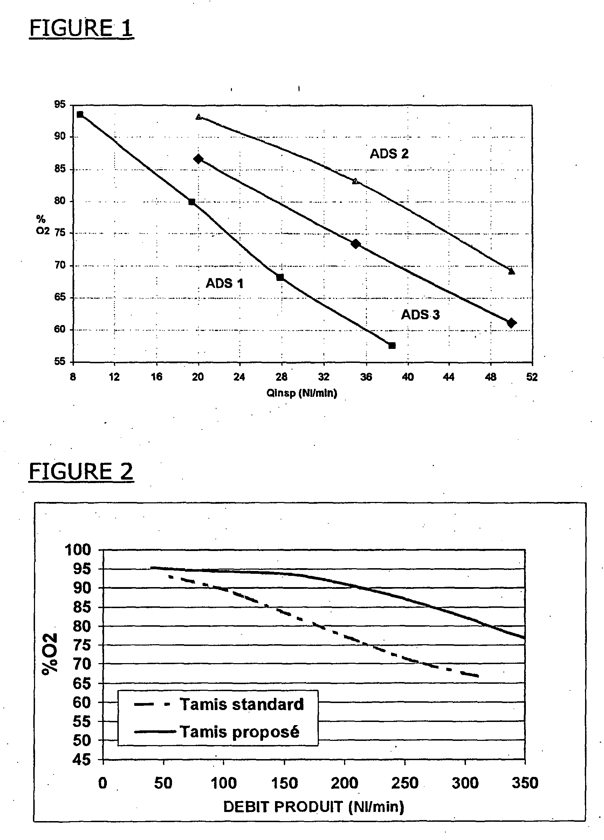

Les performances d'un système concentrateur d'oxygène ayant à alimenter les pilotes d'un avion ont été représentées sur la figure 1 qui donne les courbes de concentration en oxygène (pureté) obtenues en fonction du débit de production pour des adsorbants selon l'invention (ADS 2 et ADS 3) et, à titre comparatif, pour un adsorbant selon l'art antérieur (ADS1), c'est-à-dire :
Concentration en O₂ = f(débit de production)

Les conditions opératoires dans lesquelles ont été faites les mesures sont les suivantes :
- système à 2 adsorbeurs fonctionnant de façon alternée
- pression d'adsorption : 2 bars
- pression de désorption : 0,43 bars
- gaz d'alimentation : air ayant une teneur en oxygène de 21 % en volume
- température du gaz d'alimentation : 20 °C
- temps de cycle : 2 × 2,9 sec
- ADS 1 : est une zéolite selon l'art antérieur de type NaX contenant essentiellement des cations Na (et éventuellement des cations K), ayant une granulométrie moyenne de l'ordre de 0,7 mm -
- ADS 2 : est une zéolite de type LiLSX échangée à environ 95% par des cations Li (et des cations Na et éventuellement K pour le reste), ayant un rapport Si/Al compris entre 1 et 1,2 et une granulométrie de l'ordre de 0,7 mm
- ADS 3 : est une zéolite LiLSx identique à celle de ADS2 mais de granulométrie de l'ordre de 1,5 mm.

Le concentrateur d'oxygène utilisé comporte 2 colonnes d'adsorption remplies de particules de l'adsorbant considéré. On produit de l'oxygène en continu, une colonne se régénérant (phase de désorption) lorsque l'autre est en production (phase d'adsorption). La désorption comprend également une étape que l'on appelle l'élution et qui correspond à l'envoi d'un faible débit de gaz enrichi en O₂ à contre courant dans la colonne en pahse de régénération afin de compléter ladite régénération.

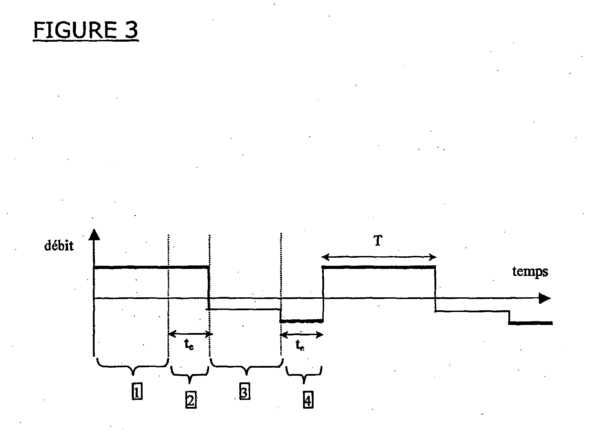

De cette façon, le concentrateur fonctionne de manière cyclique (2 phases) et chaque colonne voit 4 étapes distinctes, comme montré sur la figure 3, à savoir :
- une phase d'adsorption caractérisée par le temps de demi cycle T et comprenant :
   . une étape de production "pure" (réf. 1 sur fig. 3)
   . une phase de production et élution de l'autre colonne (réf. 2 sur fig. 3), et
- une phase de régénération avec :
   . une étape de désorption (purge) (réf. 3 sur fig. 3)
   . une étape d'élution (temps d'élution tₑ) (réf. 4 sur fig. 3).

Le débit moyen de gaz dans chaque colonne d'adsorption évolue donc en fonction du temps comme représenté sur la figure 3 qui représente le débit moyen au sein de chaque colonne en fonction du temps.

L'étape d'élution se situe en fin de cycle, lorsque la concentration d'O₂ en sortie de colonne est maximale. La période d'élution est typiquement comprise entre 10 et 50% du temps de demi-cycle, comme visible sur la figure 3.

La supériorité du type de l'adsorbant de l'invention (ADS 2 et ADS 3) par rapport à un adszorbant standard (ADS 1) est apparente sur la figure 1 étant donné que l'on y voit que, pour une concentration d'oxygène de sortie donnée, le débit produit d'oxygène est nettement supérieur que pour un adsorbant classique (ADS1) et qu'en outre, pour un débit de production donné la concentration en oxygène produit dans le gaz en sortie est nettement supérieure à celle d'un adsorbant classique.

Par ailleurs, on constate également un intérêt à utiliser des particules d'adsorbant selon l'invention de faible diamètre puisque les billes de 0.7 mm (ADS2) conduisent à de meilleures performances que celles de 1.5 mm (ADS3), toutes conditions égales par ailleurs

. Le gain en masse attendue pour un tel système OBOGS selon l'invention pour pilotes est de l'ordre de 1 kg (10%) par rapport à un adsorbant classique, toutes conditions étant égales par ailleurs.

### Exemple 2 : Système concentrateur pour passagers

Les performances d'un système concentrateur d'oxygène destiné à alimenter les passagers d'un avion ont été schématisées sur la figure 2 qui montre les courbes de concentration en oxygène (pureté en %) obtenues en fonction du débit de production (en I/lmin) pour un adsorbant selon l'invention (Tamis proposé) et, à titre comparatif, pour un adsorbant selon l'art antérieur (Tamis standard), c'est-à-dire :
Concentration en O₂ = f(débit de production)

Les conditions opératoires dans lesquelles ont été faites les mesures sont els suivantes :
- système à deux adsorbeurs fonctionnant de façon alternée
- pression d'adsorption : 3 bars
- pression de désorption : 0,46 bars
- gaz d'alimentation : air ayant une teneur en oxygène de 21 %
- température du gaz d'alimentation : 20 °C
- temps de cycle :2 × 5 sec
- adsorbant selon l'invention : identique à ADS2 de l'exemple 1
- adsorbant selon l'art antérieur : identique à ADS1 de l'exemple 1
- cycle : identique à celui de l'exemple 1 et figure 3.

Dans ce cas, le gain en masse attendu pour un système concentrateur, notamment OBOGS, pour passagers est de 60 kg (30%) avec l'adsorbant de l'invention par rapport à un adsorbant classique, toutes conditions étant égales par ailleurs.

## Revendications

1. Système embarqué dans un aéronef pour la production d'un flux gazeux enrichi en oxygène à partir d'un mélange gazeux d'oxygène et d'azote, en particulier de l'air, comportant au moins un adsorbeur contenant au moins un adsorbant permettant d'adsorber au moins une partie des molécules d'azote contenues dans le mélange d'oxygène et d'azote d'alimentation, **caractérisé en ce que** ledit adsorbant comprend une zéolite de type faujasite, ayant un rapport Si/Al de 1 à 1.50, échangée à au moins 80% par des cations lithium.

2. Système selon la revendication 1, **caractérisé en ce qu'**il comporte au moins 2 adsorbeurs fonctionnant de manière alternée.

3. Système selon l'une des revendications 1 ou 2, **caractérisé en ce que** l'adsorbant est une zéolite de type X ayant un rapport Si/Al de 1 à 1.25, de préférence de l'ordre de 1.

4. Système selon l'une des revendications 1 à 3, **caractérisé en ce que** la zéolite est sous forme de particules, notamment des billes, ayant une taille moyenne inférieure à 0.7 mm, de préférence de l'ordre de 0.5 mm.

5. Système selon l'une des revendications 1 à 4, **caractérisé en ce que** la zéolite est échangée de 85% à 97% par des cations lithium, de préférence de 86% à 95%.

6. Système selon l'une des revendications 1 à 5, **caractérisé en ce qu'**il comprend des moyens de compression permettant de comprimer le mélange gazeux contenant l'oxygène et l'azote, et des moyens de distribution permettant d'assurer une alimentation alternative de chaque adsorbeur avec le mélange gazeux comprimé délivré par les moyens de compression.

7. Aéronef équipé d'un système selon l'une des revendications 1 à 6, en particulier un avion de ligne, notamment un avion de ligne de type gros-porteur à long rayon d'action.

8. Procédé pour alimenter les voies aériennes supérieures d'au moins une personne se trouvant dans un aéronef avec un flux de gaz enrichi en oxygène, dans lequel ledit flux enrichi en oxygène est produit selon les étapes de :
a/ comprimer un mélange d'oxygène et d'azote d'alimentation à une pression comprise entre 1 et 5 bars,
b/ alimenter au moins un adsorbeur contenant au moins un adsorbant permettant d'adsorber au moins une partie des molécules d'azote contenues dans le mélange d'oxygène et d'azote d'alimentation,
c/ produire un flux de gaz enrichi en oxygène,
d/ convoyer et réguler ledit flux de gaz enrichi en oxygène jusqu'aux voies aériennes supérieures d'au moins une personne,
**caractérisé en ce que** l'adsorbant comprend une zéolite de type faujasite, ayant un rapport Si/Al de 1 à 1.50, échangée à au moins 80% par des cations lithium.

9. Procédé selon la revendication 8, **caractérisé en ce que** le flux enrichi en oxygène contient une proportion d'oxygène supérieure à la proportion d'oxygène présente dans le mélange d'oxygène et d'azote d'alimentation, de préférence le flux enrichi en oxygène contient une proportion volumique d'oxygène comprise entre 30% et 95% en volume.

10. Procédé selon l'une des revendications 8 ou 9, **caractérisé en ce que** le mélange d'oxygène et d'azote d'alimentation contient majoritairement de l'azote, de préférence le mélange d'oxygène et d'azote d'alimentation est de l'air.

11. Procédé selon l'une des revendications 8 à 10, **caractérisé en ce qu'**il comprend, en outre, une étape de régénération de l'adsorbant par diminution de la pression régnant dans adsorbeur jusqu'à une pression basse comprise entre 0.09 et 1 bar, de préférence entre 0.1 et 0.9 bar.

12. Procédé selon l'une des revendications 8 à 11, **caractérisé en ce qu'**il met en oeuvre 2 ou 3 adsorbeurs fonctionnant par cycle de production.

13. Procédé selon l'une des revendications 8 à 12, **caractérisé en ce que** chaque adsorbeur est soumis à des cycles de production ayant une durée de cycle inférieure à 15 secondes, de préférence inférieure à 10 sec.

14. Procédé selon l'une des revendications 8 à 13, **caractérisé en ce que** l'adsorbant est une zéolite de type X ayant un rapport Si/Al de 1 à 1.25, de préférence de l'ordre de 1.

15. Procédé selon l'une des revendications 8 à 14, **caractérisé en ce que** la zéolite est sous forme de particules, notamment des billes, ayant une taille moyenne inférieure à 0.7 mm, de préférence de l'ordre de 0.5 mm.

16. Procédé selon l'une des revendications 8 à 15, **caractérisé en ce que** la zéolite est échangée de 85% à 97% par des cations lithium, de préférence de 86% à 95%.

17. Procédé selon l'une des revendications 8 à 16, **caractérisé en ce que** le gaz enrichi en oxygène ainsi produit est distribué aux voies aériennes supérieures d'au moins un pilote ou d'au moins un passager se trouvant dans l'aéronef, de préférence le gaz enrichi en oxygène ainsi produit est distribué aux voies aériennes supérieures d'au moins un passager lorsque l'avion subit une dépressurisation de la cabine passager.

18. Procédé selon l'une des revendications 8 à 17, **caractérisé en ce qu'**il est mis en oeuvre à bord d'un avion de ligne, notamment un avion de ligne de type gros-porteur à long rayon d'action.

## Claims

1. System fitted on board an aircraft for the production of an oxygen-enriched gas stream from an oxygen/nitrogen gas mixture, particularly air, comprising at least one adsorber containing at least one adsorbent for adsorbing at least some of the nitrogen molecules contained in the oxygen/nitrogen feed mixture, **characterized in that** the said adsorbent comprises a faujasite-type zeolite, having an Si/Al ratio of 1 to 1.50, exchanged to at least 80% with lithium cations.

2. System according to Claim 1, **characterized in that** it comprises at least two adsorbers operating alternately.

3. System according to either of Claims 1 and 2, **characterized in that** the adsorbent is an X-type zeolite having an Si/Al ratio of 1 to 1.25, preferably about 1.

4. System according to one of Claims 1 to 3, **characterized in that** the zeolite is in the form of particles, especially beads, having a mean size of less than 0.7 mm, preferably about 0.5 mm.

5. System according to one of Claims 1 to 4, **characterized in that** the zeolite is exchanged by 85 to 97%, preferably 86 to 95%, with lithium cations.

6. System according to one of Claims 1 to 5, **characterized in that** it comprises compression means for compressing the gas mixture containing oxygen and nitrogen, and distribution means for ensuring that each adsorber is fed alternately with the compressed gas mixture delivered by the compression means.

7. Aircraft equipped with a system according to one of Claims 1 to 6, in particular an airliner, especially an airliner of the long-range, large-capacity type.

8. Method for supplying the upper airways of at least one person in an aircraft with an oxygen-enriched gas stream, in which the said oxygen-enriched stream is produced according to the following steps:
a) an oxygen/nitrogen feed mixture is compressed to a pressure of between 0.5 and 5 bar,
b) at least one adsorber containing at least one adsorbent, for adsorbing at least some of the nitrogen molecules contained in the oxygen/nitrogen feed mixture, is fed,
c) an oxygen-enriched gas stream is produced, and
d) the said oxygen-enriched gas stream is conveyed and controlled right to the upper airways of at least one person,
**characterized in that** the adsorbent comprises a faujasite-type zeolite, having an Si/Al ratio of 1 to 1.50, exchanged to at least 80% with lithium cations.

9. Method according to Claim 8, **characterized in that** the oxygen-enriched stream has an oxygen content higher than the oxygen content of the oxygen/nitrogen feed mixture and preferably the oxygen-enriched stream has an oxygen volume content of between 30 and 95% by volume.

10. Method according to either of Claims 8 and 9, **characterized in that** the oxygen/nitrogen feed mixture contains predominantly nitrogen, the oxygen/nitrogen feed mixture preferably being air.

11. Method according to one of Claims 8 to 10, **characterized in that** it furthermore includes a step of regenerating the adsorbent by reducing the pressure in the adsorber down to a low pressure of between 0.09 and 1 bar, preferably between 0.1 and 0.9 bar.

12. Method according to one of Claims 8 to 11, **characterized in that** it uses two or three adsorbers operating per production cycle.

13. Method according to one of Claims 8 to 12, **characterized in that** each adsorber undergoes production cycles having a cycle time of less than 15 seconds, preferably less than 10 s.

14. Method according to one of Claims 8 to 13, **characterized in that** the adsorbent is an X-type zeolite having an Si/Al ratio of 1 to 1.25, preferably about 1.

15. Method according to one of Claims 8 to 14, **characterized in that** the zeolite is in the form of particles, especially beads, having a mean size of less than 0.7 mm, preferably about 0.5 mm.

16. Method according to one of Claims 8 to 15, **characterized in that** the zeolite is exchanged by 85 to 97%, preferably 86 to 95%, with lithium cations.

17. Method according to one of Claims 8 to 16, **characterized in that** the oxygen-enriched gas thus produced is distributed to the upper airways of at least one pilot or of at least one passenger in the aircraft, preferably the oxygen-enriched gas thus produced is distributed to the upper airways of at least one passenger when the plane suffers depressurization of the passenger cabin.

18. Method according to one of Claims 8 to 17, **characterized in that** it is implemented on board an airliner, especially an airliner of the long-range, large-capacity type.

## Patentansprüche

1. System an Bord eines Flugzeugs zur Erzeugung eines mit Sauerstoff angereicherten Gasstroms aus einer gasförmigen Mischung von Sauerstoff und Stickstoff, insbesondere aus Luft, das mindestens einen Adsorber umfasst, der mindestens ein Adsorptionsmittel enthält, das es erlaubt, mindestens einen Teil der in dem eingespeisten Gemisch von Sauerstoff und Stickstoff enthaltenen Stickstoffmoleküle zu adsorbieren, **dadurch gekennzeichnet, dass** das Adsorptionsmittel einen Zeolith vom Typ Faujasit umfasst, der ein Si/Al-Verhältnis von 1 bis 1,5 aufweist und zu mindestens 80% durch Lithium-Kationen ausgetauscht ist.

2. System nach Anspruch 1, **dadurch gekennzeichnet, dass** es mindestens zwei wechselweise arbeitende Adsorber umfasst.

3. System gemäß einem der Ansprüche 1 oder 2, **dadurch gekennzeichnet, dass** das Adsorptionsmittel ein Zeolith vom Typ X ist, der ein Si/Al-Verhältnis von 1 bis 1,25, vorzugsweise von etwa 1 hat.

4. System nach einem der Ansprüche 1 bis 3, **dadurch gekennzeichnet, dass** der Zeolith in Form von Teilchen, insbesondere von Kugeln vorliegt, die eine mittlere Größe von weniger als 0,7 mm, vorzugsweise von etwa 0,5 mm aufweisen.

5. System nach einem der Ansprüche 1 bis 4, **dadurch gekennzeichnet, dass** der Zeolith zu 85% bis 97%, vorzugsweise zu 86% bis 95% durch Lithium-Kationen ausgetauscht ist.

6. System nach einem der Ansprüche 1 bis 5, **dadurch gekennzeichnet, dass** es Mittel zur Kompression umfasst, die es erlauben, das Sauerstoff und Stickstoff enthaltende Gasgemisch zu komprimieren, und Mittel zur Verteilung, die es erlauben, eine wahlweise Einspeisung des von den Mitteln zur Kompression abgegebenen komprimierten Gasgemisches in jeden der Adsorber sicherzustellen.

7. Flugzeug, das mit einem System nach einem der Ansprüche 1 bis 6 ausgerüstet ist, insbesondere ein Linienflugzeug, besonders ein Linienflugzeug vom Typ Großraumflugzeug mit großem Aktionsradius.

8. Verfahren zur Versorgung der oberen Atemwege mindestens einer Person, die sich in einem Flugzeug befindet, mit einem mit Sauerstoff angereicherten Gasstrom, wobei der mit Sauerstoff angereicherte Gasstrom in folgenden Schritten hergestellt wird:
a) Komprimieren eines einzuspeisenden Gemisches von Sauerstoff und Stickstoff auf einen Druck zwischen 1 und 5 bar,
b) Speisen mindestens eines Adsorbers, der mindestens ein Adsorptionsmittel enthält, das es erlaubt, mindestens einen Teil der in dem eingespeisten Gemisch von Sauerstoff und Stickstoff enthaltenen Stickstoffmoleküle zu adsorbieren
c) Erzeugen eines mit Sauerstoff angereicherten Gasstroms
d) Leiten und Regulieren des mit Sauerstoff angereicherten Gasstroms bis zu den oberen Atemwegen mindestens einer Person
**dadurch gekennzeichnet, dass** das Adsorptionsmittel einen Zeolith vom Typ Faujasit umfasst, der ein Si/Al-Verhältnis von 1 bis 1,5 aufweist und zu mindestens 80% mit Lithium-Kationen beladen ist.

9. Verfahren nach Anspruch 8, **dadurch gekennzeichnet, dass** der mit Sauerstoff angereicherte Gasstrom einen Sauerstoffanteil enthält, der höher ist als der Sauerstoffanteil in dem eingespeisten Gemisch von Sauerstoff und Stickstoff, vorzugsweise enthält der mit Sauerstoff angereicherte Strom einen Volumenanteil von Sauerstoff zwischen 30 und 95 Volumenprozent.

10. Verfahren nach einem der Ansprüche 8 oder 9, **dadurch gekennzeichnet, dass** das eingespeiste Gemisch von Sauerstoff und Stickstoff überwiegend Stickstoff enthält, vorzugsweise ist das eingespeiste Gemisch von Sauerstoff und Stickstoff Luft.

11. Verfahren nach einem der Ansprüche 8 bis 10, **dadurch gekennzeichnet, dass** es außerdem einen Schritt der Regeneration des Adsorptionsmittels umfasst, in dem der im Absorber herrschende Druck bis zu einem niedrigen Druck zwischen 0,09 und 1 bar, vorzugsweise zwischen 0,1 und 0,9 bar vermindert wird.

12. Verfahren nach einem der Ansprüche 8 bis 11, **dadurch gekennzeichnet, dass** es 2 oder 3 in Produktionszyklen arbeitende Adsorber verwendet.

13. Verfahren nach einem der Ansprüche 8 bis 12, **dadurch gekennzeichnet, dass** jeder Adsorber Produktionszyklen unterliegt, die eine Zyklusdauer unter 15 Sekunden, vorzugsweise unter 10 Sekunden haben.

14. Verfahren nach einem der Ansprüche 8 bis 13, **dadurch gekennzeichnet, dass** das Adsorptionsmittel ein Zeolith vom Typ X ist, der ein Si/Al-Verhältnis von 1 bis 1,25, vorzugsweise von etwa 1 hat.

15. Verfahren nach einem der Ansprüche 8 bis 14, **dadurch gekennzeichnet, dass** der Zeolith in Form von Teilchen, insbesondere von Kugeln vorliegt, die eine mittlere Größe von weniger als 0,7 mm, vorzugsweise von etwa 0,5 mm aufweisen.

16. Verfahren nach einem der Ansprüche 8 bis 15, **dadurch gekennzeichnet, dass** der Zeolith zu 85% bis 97%, vorzugsweise zu 86% bis 95% mit Lithium - Kationen beladen ist.

17. System nach einem der Ansprüche 8 bis 16, **dadurch gekennzeichnet, dass** das so erzeugte, mit Sauerstoff angereicherte Gas in die oberen Atemwege mindestens eines Piloten oder Passagiers, der sich in dem Flugzeug befindet, geleitet wird, vorzugsweise wird das so erzeugte, mit Sauerstoff angereicherte Gas in die oberen Atemwege mindestens eines Passagiers geleitet, wenn das Flugzeug einen Druckverlust in der Passagierkabine erleidet.

18. Verfahren nach einem der Ansprüche 8 bis 17, **dadurch gekennzeichnet, dass** es an Bord eines Linienflugzeugs, insbesondere eines Linienflugzeugs vom Typ Großraumflugzeug mit großem Aktionsradius angewendet wird.
